# EUROPÄISCHE PATENTSCHRIFT

(11) **EP 1 417 652 B1**
(45) Veröffentlichungstag und Bekanntmachung des Hinweises auf die Patenterteilung: **12.04.2017**
(21) Anmeldenummer: 02742702.0
(22) Anmeldetag: 30.04.2002
(51) Int. Cl.: G06Q 10/00, G07F 7/06

(54) **PFANDRÜCKNAHMESYSTEM FÜR EINWEGVERPACKUNGEN**
DEPOSIT RETURN SYSTEM FOR DISPOSABLE OBJECTS
SYSTEME DE REPRISE D'EMBALLAGES A USAGE UNIQUE CONSIGNES

(30) Priorität: 30.04.2001 EP 01110633
(43) Veröffentlichungstag der Anmeldung: 12.05.2004
(73) Patentinhaber: RETURNIT Systembetriebs-GmbH, 41179 Mönchengladbach (DE)
(72) Erfinder: STOFFELLSMA, Bouke, Christiaan, 41061 Mönchengladbach (DE)
(74) Vertreter: Hauck Patentanwaltspartnerschaft mbB
(86) Internationale Anmeldenummer: PCT/DE2002/001566
(87) Internationale Veröffentlichungsnummer: WO 2002/089073

(56) Entgegenhaltungen:
- EP-A- 1 274 023
- EP-A- 1 280 111
- DE-A1- 19 906 255
- GB-A- 2 115 393
- US-A- 4 248 389
- US-A- 4 440 284
- US-A- 4 579 216
- US-A- 5 361 913
- US-A- 5 408 079
- US-A- 5 478 990
- US-A- 5 978 774

## Beschreibung

Die Erfindung betrifft ein rechentechnisch verwaltetes Pfandsystem für Einwegverpackungen, eine Rücknahmeeinrichtung für bepfandete Einwegverpackungen, ein Originalitätssiegel zur Kennzeichnung von Einwegverpackungen und eine Erfassungsvorrichtung zur Verwendung mit dem Pfandsystem.

In Deutschland und anderen Ländern existieren Pfandsysteme für Mehrwegverpackungen wie Glas-oder PET-Flaschen. Der Gesetzgeber hat in Deutschland 1991 eine Verpackungsverordnung (VerpackV) erlassen, die eine Mindestquote von 72% für die bepfandeten Mehrwegverpackungen gewährleisten soll. Dieser gesetzlich vorgeschriebene Anteil wurde seit 1997 mehrfach nicht erreicht.

Die VerpackV schreibt bei mehrfacher Unterschreitung der Mindestquote die Einführung eines Pfandes auch für Einwegverpackungen zwingend vor. Bisherige Pfandrücknahmesysteme bilden einen geschlossenen Kreislauf zwischen dem Abfüller, dem Handel und dem Verbraucher. Das Pfand ist Bestandteil der Verpackung und kann so auch mit der Verpackung den Besitzer wechseln. Bei Einwegverpackungen ergibt sich die Problemstellung, dass die Verpackungen nicht mehr in einem direkten Kreislauf eingesetzt werden können, da sie vom Abfüller nicht erneut verwendet werden. Die bepfandeten Verpackungen werden stattdessen der Entsorgung übergeben. Ein Weg, dieses zu gewährleisten ist, dass die vom Handel zurückgenommenen Einwegverpackungen zerstört werden. Hierzu sind komplexe Automatensysteme mit unterschiedlichen Zerstörungsmechanismen erforderlich. Diese Automaten sollen an großen Einkaufszentren aufgestellt werden und die Rückgabe ermöglichen.

Bisherige Lösungsansätze für die Realisierung eines Pfands für Einwegverpacken gehen davon aus, fälschungssichere Kennzeichnungen, z. B. in Form von Hologrammen, einzusetzen, also einen Kopierschutz des Pfandsiegels vorzusehen und die zurückgegebenen Verpackungen zu zerstören. Diese Lösungen sind nicht nur umständlich und teuer, sondern auch betrugsanfällig.

Aus DE 199 06 255 A1 ist ein Verfahren zur Herstellung eines zu bepfandenden Gegenstandes bekannt, das mit dem Anbringen der Pfandmarke beginnt und mit ihrer Zerstörung endet.

Der Erfindung liegt die Aufgabe zugrunde ein einfaches und kosteneffektives Pfandrücknahmesystem bereitzustellen.

Die Aufgabe wird durch das Verfahren mit den Merkmalen aus Anspruch 1 gelöst.

Dieses wird erfindungsgemäß durch ein Verfahren gelöst, das die folgenden Verfahrensschritte aufweist: Zuordnen der Einwegverpackung zu einer eindeutigen Kennzeichnung aus einer Vielzahl in einer Datenbank verwalteten Kennzeichnungen (Verknüpfung), Zuordnen der Kennzeichnung aus der Datenbank zu einem Pfandwert, Verwendung des Gegenstandes in mindestens einem Zwischenschritt, Erfassen der Kennzeichnung des Gegenstandes und Identifikation der Einwegverpackung anhand der Kennzeichnung, Lösen der Verknüpfung der Kennzeichnung in der Datenbank bei Entpfandung der Einwegverpackung. Unter dem Begriff Kennzeichnung ist vorliegend jede Art der eindeutigen Kenntlichmachung der Einwegverpackung, beispielsweise durch eine Pfandnummer, zu verstehen. Die Pfandnummer kann ein numerisches, alphanumerisches oder grafisches Darstellungsformat aufweisen. Zudem sind Kombinationen der Darstellungsformate möglich.

Die Pfandnummer wird vorzugsweise an dem zu bepfandenden Gegenstand angeordnet, wobei insbesondere eine unmittelbare Anbringung in Art einer Integration in die Oberfläche wünschenswert erscheint, da dieses die Verbindung von der Einwegverpackung zu der Pfandnummer physisch sicherstellt.

Systemgemäß werden Verpackungen bei der Abfüllung gekennzeichnet, indem eine eindeutige Pfandnummer aufgebracht wird. Diese Pfandnummer wird in einer Pfanddatenbank mit dem zugehörigen Pfandwert und evtl. mit weitergehenden Informationen gespeichert.

Alternativ kann die Pfandnummer nachträglich aufgedruckt oder auf einem Aufkleber aufgebracht werden, der mit dem Gegenstand verbindbar ist.

Die Kennzeichnung der Einwegverpackung, also die auf ihr angebrachte Pfandnummer ist so ausgebildet, dass sie fälschungssicher ist, um derart einen Missbrauch zu vermeiden.

Die Verwaltung der Kennzeichnungen und deren Zuordnung zu Einwegverpackungen bzw. Pfandwerten geschieht bei dem erfindungsgemäßen Pfandsystem durch eine Pfanddatenbank. Diese kann als eine zentrale Datenbank oder als verteilte bzw. segmentierte Datenbank ausgestaltet sein. Diese Art der Verwaltung der Kennzeichnungen ist deswegen besonders vorteilhaft, weil sie online, und damit so zeitnah wie möglich, eine unmittelbare Überprüfung eines geltend gemachten Anspruchs seitens einer die bepfandeten Einwegverpackung zurückgebenden Person auf die Gewährung des mit dem Pfandwert verbundenen Gegenwertes ermöglicht.

Beispielsweise wird eine Einwegverpackung bei der Abfüllung bepfandet und kann dann mit dem Pfand versehen durch eine oder mehrere Handelsstufen laufen. Bei der Rückgabe der Einwegverpackung wird diese entpfandet. Um sicherzustellen, dass für die Entsorgung der Einwegverpackungen die vorgeschriebene oder gewünschte Entsorgungsprozesskette eingehalten wird, kann in einer Weiterentwicklung vorgesehen sein, dass beim Durchlaufen der einzelnen Prozessschritte den Betreibern der Verwertungs- oder Entsorgungsanlagen Beträge des Pfands gutgeschrieben werden.

Im Normalfall werden die Pfandnummern von der Pfanddatenbank abgerufen bevor sie auf die Einwegverpackung aufgebracht werden, um eine evtl. Mehrfach-Bepfandung (Versehen mehrerer Verpackungen mit derselben Pfandnummer) zu verhindern. Alternativ können den Abfüllbetrieben von der Pfanddatenbank bestimmte, für sie reservierte Nummernkreise aus dem Reservoir an Pfandnummern zugewiesen werden.

Ferner ermöglich der Einsatz von Datenbanken aber auch andere Funktionen sowie die Initiierung zusätzlicher Verfahrensabläufe bei Abgabe einer bepfandeten Einwegverpackung. Zunächst kann es sich dabei um die Rückerstattung des dem Pfandwert entsprechenden Geldbetrages an die abgebende Person handeln.

Dabei ist es besonders vorteilhaft, diese Geldrückgabe bargeldlos, beispielsweise durch Gutschrift auf ein Konto, eine Geldkarte o. ä. zu bewerkstelligen, da somit keine Bargeldbeträge vorgehalten werden müssen. Ein bargeldloses Verfahren kann in diesem Zusammenhang aber jede geldwerte, quasi konvertierbare Leistung für die abgebende Person sein. So ist es auch vorstellbar einen Betrag einer anderen Gesellschaft als einer kontoführenden Bank, also beispielsweise einem Telefonanschluss oder einer anonymen Guthabenkarte gutzuschreiben. Bei einer eben erwähnten Guthabenkarte kann es beispielsweise vorgesehen sein, dass diese ausschließlich zum Zweck der Gutschrift von Pfandwerten in einem Verfahren von entsprechenden Stellen ausgegeben wird.

Besonders vorteilhaft ist es in diesem Zusammenhang, wenn bei der Abgabe der Einwegverpackung zusätzliche, der Person zuordenbare Daten aufgenommen und verarbeitet werden. In diesem Fall findet sozusagen eine Personalisierung des für den Pfandwert der abgegebenen Einwegverpackung auszuzahlenden Guthabenbetrages statt, bei der die Person die Verwendung des Betrages zu ihren Gunsten bestimmen kann.

Entsprechend der Erfindung kann die Kennzeichnung der Einwegverpackung mit weiteren Informationen verknüpft sein. So ist es unter anderem denkbar die Kennzeichnung neben der Pfandnummer etwa mit einem den Pfandwert ausdrückenden Symbol, insbesondere einer Zahl, zu versehen oder auch zusätzlich ein Verfallsdatum an der Kennzeichnung anzubringen, das einem Verbraucher klarmacht, bis zu welchem Zeitpunkt seitens der Entsorgungswirtschaft eine Auszahlung der Einwegverpackung des Pfandes garantiert ist.

Bei dem erfindungsgemäßen Pfandrücknahmesystem ist es vorgesehen, dass die Einwegverpackung bei der Abgabe unbeschädigt bleibt, die Zerstörung der Verpackungen ist also nicht zwingend. An die Stelle der mechanischen Zerstörung des Pfandguts tritt die elektronische Entwertung der bepfandeten Verpackungen. Da das Konzept ohne die aufwendige Zerstörung der Verpackung bei der Rücknahme auskommt, reduziert das System im Vergleich zu den vom Umweltministerium veröffentlichten Schätzungen die einmaligen Investitionen von rund 1 Milliarde Euro auf 141 Millionen Euro. Diese Kosteneinsparung wird wesentlich durch die preiswerten und kleinen Entwertungsgeräte bewerkstelligt. Entwertungsgeräte können mobil an Kiosken, Tankstellen und natürlich auch im Handel schnell und einfach eingesetzt werden. Verpackungen können dort entpfandet und problemlos entsorgt werden.

Die Rücknahme der Einwegverpackungen kann an allen existierenden Akzeptanzstellen für Mehrwegverpackungen erfolgen. An die Stelle einiger tausend zentraler Automaten tritt ein System, welches die Rücknahme der Verpackungen an hunderttausend Kiosken und Supermärkten in der Fläche ermöglicht.

Die Aufgabe wird weiterhin durch Anspruch 34 gelöst. Eine Rücknahmeeinrichtung für bepfandete Einwegverpackungen insbesondere für Einwegverpackungen, ist zur Verwendung mit dem vorgenannten Pfandsystem vorgesehen und eine Aufnahmeeinrichtung und wenigstens eine Erfassungsvorrichtung aufweist. Die Erfassungsvorrichtung erfasst und identifiziert einen in der Aufnahmeeinrichtung angeordneten Einwegverpackung anhand einer auf diesem angebrachten Kennzeichnung eindeutig. An der Aufnahmeeinrichtung der erfindungsgemäßen Rücknahmeeinrichtung sind also Mittel zur Erfassung einer zur Rücknahme vorgesehenen Einwegverpackung angeordnet, so dass dieser erfasst und identifiziert werden kann und nach einer optional möglichen Freigabe der Entsorgung zuführbar ist.

Bei einer vorteilhaften Weiterbildung der Rücknahmeeinrichtung ist an dieser eine Entpfandungseinrichtung vorgesehen, mittels derer die Einwegverpackung in einem Entpfandungsvorgang entpfandbar und ein der Einwegverpackung zugeordneter Pfandwert einem Abrechnungsverfahren zuführbar ist. Nach erfolgter Erfassung und Identifikation in der Rücknahmeeinrichtung wird der zurückzunehmende wir die Einwegverpackung nachfolgend durch die Entpfandungseinrichtung derart pfandtechnisch entwertet, dass er seinen Pfandwert verliert. Die weitere Verwendung dieses Pfandwerts geschieht dann in einem beliebig auszugestaltenden Abrechnungsverfahren, das beispielsweise im Wege der Verrechnung bargeldlos erfolgt.

Besonders vorteilhaft lässt sich dies durchführen, wenn die Entpfandungseinrichtung während des Entpfandungsvorgangs zumindest zeitweilig in Verbindung mit mindestens einer Datenbank steht, in der die Verknüpfung der Kennzeichnung gelöst und derart deren weitere Verwendung verhindert wird. Dazu nimmt die Entpfandungseinrichtung auf einem gängigen Kommunikationsweg, wie etwa einem leitungs- oder funkgestützten Telekommunikationsweg eine Verbindung zu einer Datenbank auf, die die Zuordnungen von Einwegverpackungen und Kennzeichnungen verwaltet. Mithin ist es weiterhin von Vorteil, wenn die Entpfandungseinrichtung Kommunikationsmittel aufweist, über die sie eine Verbindung zu einer Datenverarbeitungseinrichtung mit Zugriff auf eine Datenbank herstellt.

Die Etablierung der Verbindung zu der Datenbank kann dabei sowohl in dem Sinne einmalig sein, als die Verbindung nach einem einmaligen Aufbau ständig besteht, sie kann aber auch zu bestimmten Zeitpunkten oder Anforderungen erst hergestellt werden. Weiter ist es in diesem Zusammenhang vorstellbar, dass die Entpfandungseinrichtung mit einem lokalen Speicher ausgestattet ist, der beispielsweise dann lokal eine eigene Unterdatenbank, etwa mit einem bestimmten reservierten Kennzeichnungskreis vorhält und ein Abgleich über eine Verbindung zu einer weiteren Datenbank nur zu festgelegten Zeitpunkten stattfindet. Der erwähnte lokale Speicher könnte darüber hinaus auch dazu verwendet werden, einen Anzahl von zuletzt verwendeten Kennzeichnungen vorzuhalten, damit deren Abfrage und Prüfung noch schneller als durch die Abfrage einer entfernt vorgehaltenen Datenbank von statten geht.

In der erwähnten Datenbank wird bei dem Entpfandungsvorgang die Verknüpfung beispielsweise dadurch gelöst, dass die bevorzugt eindeutige Kennzeichnung aus der Datenbank ausgetragen wird. Weiterhin ist auch vorstellbar, dass diese Kennzeichnung lediglich mit einem zeitlich begrenzten oder endgültigen Sperrvermerk in der Datenbank verbleibt. Das Lösen der Verknüpfung zwischen Kennzeichnung, Einwegverpackung und Pfandwert führt jedenfalls dazu, dass eine eventuell gefälschte, gleiche Kennzeichnung nicht noch einmal auf diese Weise verwendet werden könnte und die Rücknahmeeinrichtung in diesem Fall die Herausgabe des Pfandwertes verweigerte, so dass also eine mehrfache Verwendung der Kennzeichnung verhindert wird. Unter dem erwähnten Telekommunikationsweg ist selbstverständlich auch jede Rechnerverbindung zwischen zwei Datenverarbeitungsanlagen zu verstehen. So könnte beispielsweise die Rücknahmestation, bzw. deren Entpfandungseinrichtung über einen Funkstandard, wie z. B. Wireless LAN, mit einem sogenannten Access Point kommunizieren, der dann die Verbindung mit dem die Datenbank vorhaltenden Rechner aufnimmt. Weiterhin ist es auch vorstellbar, dass die Entpfandungseinrichtung selbst als dieser Access Point für solche Entpfandungseinrichtungen fungiert, die lediglich eine zu dieser Art der Kommunikation vorgesehene Funkschnittstelle aufweisen.

Die an der Entpfandungseinrichtung angeordneten Kommunikationsmittel beziehen sich weiterhin auch auf Mittel, mit denen sich ein Benutzer, sei er eine eine Einwegverpackung zurückgebende Person oder auch eine Wartungstechniker gegenüber der Entpfandungseinrichtung identifizieren kann. Dies kann etwa durch die Benutzung einer bestimmte Informationen tragende Codekarte geschehen, für die eine Leseeinheit an der Entpfandungseinrichtung vorgesehen sein kann. Die erwähnte Codekarte kann dafür beliebige, für das System verwendbare Informationen enthalten, so etwa den Namen des Anwenders oder eine Kontoverbindung. Nicht zwingend ist hierbei, dass die Information personalisiert ist, denn es ist dabei beispielsweise auch eine anonymisierte oder vorläufige Karte denkbar, der erst zu einem späteren Zeitpunkt oder auch überhaupt nicht personenbezogene Daten zugeordnet werden, so ist beispielsweise die Codekarte als zu irgendeinem Payback System zugeordnete Karte denkbar. Für einen Wartungstechniker wiederum sind Codekarten denkbar, die entweder diesem oder der zu wartenden Rücknahmeeinrichtung zuordenbare Daten enthält.

Im Sinne einer einfachen Handhabbarkeit ist es wünschenswert, wenn die Aufnahmeeinrichtung zur Positionierung des eingebrachten Einwegverpackung mindestens eine Führungseinrichtung, insbesondere eine Führungsschiene aufweist. Die Anordnung einer Führungseinrichtung ist deshalb sinnvoll, weil sie es einem Benutzer der Aufnahmeeinrichtung die Einbringung des zurückzunehmenden Gegenstandes einfach und sicher gestattet und darüber hinaus der Erfassungsvorrichtung eine schnelle und sichere Erfassung und Identifikation des Gegenstandes und seiner Kennzeichnung erlaubt. Ferner kann diese Führungseinrichtung auch zur Vorauswahl der zurückzunehmenden Einwegverpackungen derart bestimmt sein, dass sie die nur Zuführung von Einwegverpackungen bestimmter Geometrie gestattet, was im Sinne einer raumsparenden oder vorselektierten Lagerung gewünscht sein kann. Als zusätzliche Hilfe kann beispielsweise an der Führungseinrichtung ein Anschlag vorgesehen sein, der dem Benutzer eine Einführtiefe zur optimalen Erfassung der Einwegverpackung vorgibt.

Ferner besteht die Möglichkeit, wenn die aufzunehmenden Einwegverpackungen anhand ihres Gewichtes zu klassifizieren sind, an der Führungseinrichtung einen Wägemechanismus anzubringen, der die von ihm ermittelte Gewichtsinformation weiterleitet.

In einer Weiterbildung der erfindungsgemäßen Rücknahmeeinrichtung kann die Aufnahmeeinrichtung einen integrierten oder separat an ihr anordenbaren Verschlussmechanismus aufweisen. Dieser ist etwa in Art eines vor die Öffnung der Aufnahmeeinrichtung verschwenkbaren, automatischen oder händisch betätigbaren Verschlussteils vorstellbar. Einerseits kann mit Hilfe dieses Verschlussmechanismus einem Missbrauch der Rücknahmeeinrichtung vorgebeugt werden, wenn diese unbeabsichtigt oder mit Absicht unsachgemäß gebraucht werden soll, etwa durch Einbringung nicht vorgesehener Einwegverpackungen andererseits ist so eine Möglichkeit geschaffen, die Rücknahmeeinrichtung bei vollem Füllstand eines dazu vorgesehenen Aufnahmebehälters bis zu dessen Leerung vom weiteren Gebrauch auszunehmen.

Damit es zu einem bestimmungsgemäßen Gebrauch der Rücknahmeeinrichtung und dem Einsatz des Pfandsystems kommen kann, sind erfindungsgemäß an der Erfassungsvorrichtung Erfassungsmittel in Form einer Lichtschranke und/oder eines Scanners und/oder einer Kamera vorgesehen. Dabei dient das Erfassungsmittel in der Art eines Scanners der Erfassung und Identifikation in die Aufnahmeeinrichtung eingeführten des Gegenstandes selbst, beispielsweise anhand von dessen Kennzeichnung oder aber auch anhand von dessen, Geometrie. Erfasst der Scanner die Kennzeichnung der Einwegverpackung, so kann diese durch die Entpfandungseinrichtung weiterverarbeitet werden, während bei einer erfolglosen Identifikation weitere Schritte des Pfandverfahrens verweigert werden können.

Ein als Lichtschranke ausgelegtes Erfassungsmittel kann an der Rücknahmeeinrichtung so eingesetzt werden, dass die mit der Entpfandung durch die Entpfandungseinrichtung verbundenen Vorgänge erst dann angestoßen werden, wenn die Einwegverpackung einen Punkt oder eine Ebene der Rücknahmeeinrichtung passiert hat, der eine Wiederentnahme aus der Rücknahmeeinrichtung unmöglich macht. Hierdurch ist sichergestellt, dass die zu entpfandende Einwegverpackung auch tatsächlich einer Entsorgung zugeführt wird und das dafür herauszugebende Pfand berechtigt seitens des Zurückgebenden gefordert wird. Wahlweise wäre etwa auch eine Anordnung von Reflektoren im Sichtfenster des Scanners anstatt einer Lichtschranke denkbar. Auch eine Kamera kann schließlich als Erfassungsmittel eingesetzt werden, beispielsweise anstatt des Scanners, wobei das seitens der Kamera aufgenommene Signal auch optisch weitervermittelt werden und derart zur Informationsübermittlung dienen kann.

Für eine anwenderfreundliche Benutzerführung ist es vorteilhaft, an der Rücknahmeeinrichtung zur Informationsübermittlung an einen Benutzer eine Anzeigeeinrichtung anzuordnen, insbesondere ein Sichtfenster und/oder einen optischen und/oder akustischen Signalgeber und/oder ein Display. Auf diese Weise ist es möglich, mit dem einen bepfandeten Gegenstand zurückgebenden Benutzer bestimmte Informationen zukommen zu lassen und so sein Verhalten in den nächsten Schritten zu beeinflussen. So können beispielsweise die Signalgeber, die zum Beispiel Leuchtdioden sein können oder ein einfacher Lautsprecher dazu vorgesehen sein, dem Benutzer unter Abgabe verschiedener Signale anzuzeigen, ob er die Einwegverpackung in der Aufnahmeeinrichtung richtig angeordnet hat. Ein Sichtfenster gäbe dem Benutzer die Möglichkeit, die in der Aufnahmeeinrichtung angeordneten Einwegverpackung zu beobachten und bei Bedarf neu auszurichten. Gleiches könnte auch ein Display leisten, das ein durch die oben erwähnte Kamera zu ihm weitergeleitetes Signal anzeigt. Ist das Display beispielsweise als berührungssensitiver Touchscreen ausgelegt, gibt es dem Benutzer eine Vielzahl weiterer Möglichkeiten zur Interaktion. Insbesondere können mit einem solchen Display dann von dem Benutzer direkt einzugebende Informationen, beispielsweise zur weiteren Verwendung des zu verrechnenden Pfandbetrages angefordert werden. Darüber kann das Display beispielsweise zur Übermittlung von Informationen an Wartungspersonal vor Ort verwendet werden, etwa bezüglich des Füllstandes, der Sauberkeit, Energieversorgung oder von Wartungsintervallen.

Zur Integration einer erfindungsgemäßen Rücknahmeeinrichtung in schon bestehende Sammelvorrichtungen ist es besonders vorteilhaft, wenn die Rücknahmeeinrichtung an einem Sammelbehälter für die zurückzunehmenden Einwegverpackungen anordenbar ist. Auf diese Weise können praktisch sämtliche zur Aufnahme von Einwegverpackungen derzeit und künftig verwendeten Sammelbehälter, beispielsweise die an vielen Orten aufgestellten Container, zur Verwendung mit der Rücknahmeeinrichtung ausgerüstet werden. Die Rücknahmeeinrichtung ist dazu lediglich an dem Sammelbehälter anzuordnen, bzw. mit dafür vorgesehenen Bereichen in die Aufnahmeöffnung des entsprechenden Sammelbehälters einzuführen und zum Beispiel mittels einer Klemme und eines Schlosses festzulegen und zu sichern. Für die verschiedenen unterschiedlichen Containerformen kann dabei zusätzlich ein etwa als Muffe zwischen der Rücknahmeeinrichtung und dem Sammelbehälter anzuordnendes Kupplungsstück vorgesehen sein. Für einen möglichen Zeitraum der Nichtverwendung der Rücknahmeeinrichtung kann der Sammelbehälter trotz Verbleib der Rücknahmeeinrichtung als gewöhnlicher Müllcontainer weiterverwendet werden.

Zum Betrieb der Rücknahmeeinrichtung ist es vorgesehen, dass diese eine netzunabhängige oder netzgestützte Spannungsversorgung aufweist. Je nach den örtlichen Gegebenheiten kann die Rücknahmeeinrichtung damit an Plätzen betrieben werden, an denen eine Spannungsversorgung durch ein Netz zur Verfügung steht, es ist dann aber auch möglich, beispielsweise durch den Einsatz von Akkumulatoren, die Rücknahmeeinrichtung über einen gewissen Zeitraum energieautark zu betreiben. Dieser Zeitraum lässt sich durch Vorsehen eines energiesparenden Betriebsmodus bei Nichtverwendung zusätzlich verlängern.

Wie vorstehend schon erwähnt ist es für eine Einflussnahme auf die Prozesse der Rücknahmeeinrichtung wünschenswert, wenn dass diese eine Benutzerschnittstelle aufweist, die einem Benutzer eine Interaktion mit der Rücknahmeeinrichtung, insbesondere die Durchführung eines Abrechnungsvorgangs zur Verrechnung des Pfandwerts, erlaubt. Die Form der Interaktion kann dabei von der einfachen Inbetriebnahme der Rücknahmeeinrichtung, etwa durch die Einführung einer Codekarte in einen Kartenleser bis zu einer komplexen Transaktion des Pfandwerts oder mehrerer Pfandwerte auf ein irgendwie geartetes Abrechnungssystem reichen.

Ferner ist ein Originalitätssiegel zur Kennzeichnung der Einwegverpackung für ein rechentechnisch verwaltetes Pfandsystem vorgesehen. Dieses ist mittels einer Klebschicht auf der Einwegverpackung befestigt, weist eine auf der Klebschicht angeordnete, bedruckbare Trägerschicht auf, die mit einer der Einwegverpackung zugeordneten Kennzeichnung versehbar ist. Die Trägerschicht ist dabei zumindest teilweise von einer Siegelschicht überdeckt, die nur zerstörbar von der Trägerschicht ablösbar ist. Das erfindungsgemäße Originalitätssiegel besteht mithin aus einem mehrschichtigen Aufkleber für die zu kennzeichnenden Einwegverpackung beispielsweise in Art eines Etiketts, der an einer dafür vorgesehenen Stelle der Einwegverpackung angebracht werden kann. Zwischen einer eine Information tragenden Trägerschicht, die zum Auftrag der Information drucktechnisch bearbeitet wurde, und der Einwegverpackung ist zur Haftung des Originalitätssiegels eine Klebstoffschicht angeordnet. Auf der einem Betrachter zugewandten Seite des Originalitätssiegels ist dieses durch eine Siegelschicht geschützt, die die Trägerschicht zumindest teilweise bedeckt. Diese Siegelschicht dient einmal dem mechanischen Schutz der Kennzeichnung, zum anderen kann sie so ausgelegt sein, dass nur ihr Ablösen eine Entpfandung der Einwegverpackung durch Freilegen der Kennzeichnung überhaupt möglich macht. Dabei wird diese Siegelschicht zerstört. In einer vorteilhaften Weiterbildung ist die Klebstoffschicht ein nichtablösbarer Klebstoff. Dadurch wird zwischen der Einwegverpackung und der Kennzeichnung auf der Trägerschicht ein nicht zu lösender Verbund geschaffen, der lediglich unter Zerstörung zumindest der Kennzeichnung wieder gelöst werden kann, was dazu führt, dass der entsprechende Pfandwert nicht mehr eingelöst werden kann.

In einer weiteren Ausgestaltung weist die Trägerschicht des Originalitätssiegels mindestens einen Einschnitt auf. Dieser Einschnitt führt dazu, dass bei einem Versuch, das Originalitätssiegel doch von der Klebstoffschicht zu lösen, diese entlang des Einschnitts einreißt bzw. durchreißt, so dass die weitere Verwendung nicht möglich ist.

Besonders bevorzugt umfasst die Kennzeichnung eines erfindungsgemäßen Originalitätssiegels einen zweidimensionalen Barcode. Die Verwendung eines derartigen Codes ist schon deswegen wünschenswert, weil sich auf diese Weise mit relativ geringem Platzaufwand eine Fülle möglicher Kennungen ergibt, die in der Größenordnung von etwa 1018 oder noch grösser liegen können. Außerdem bietet sich diese Form der Codierung an, da sie sehr geeignet ist, in dem Code Zusatzinformationen, die sich auf den Gegenstand, dessen Material, Erzeuger o. ä. beziehen können, unterzubringen. Zudem erleichtert diese Form der Codierung auch die Abrechnung von Pfandwerten. Daneben lassen sich mit dieser Codeform auch einfach Nummernkreise für eine beliebige Verwendung erzeugen und zuordnen. Diese können sich beispielsweise wiederum auf bestimmte Arten von Waren oder auch Vertriebsgebiete o. ä. beziehen.

Ferner kann in einer Weiterbildung die Siegelschicht mit einem zusätzlichen visuellen Merkmal versehen sein. Dabei kann es sich beispielsweise um eine farbliche Markierung handeln, die als Teil der Siegelschicht wiederum einen Teil der Kennzeichnung der Einwegverpackung überdeckt. Bei einer Beschädigung oder Entfernung dieses visuellen Merkmals wird ein Benutzer durch das Fehlen des Merkmals sofort darauf hingewiesen, dass die Kennzeichnung eventuell schon einer Entpfandung unterzogen wurde, so dass er durch den Hinweis angehalten wird, auf einen Erwerb derjenigen Einwegverpackung zu verzichten, für den er bei Rückgabe möglicherweise keinen Gegenwert für den Pfandwert mehr erhält.

Unter den vielfachen Möglichkeiten der Ausgestaltung der Siegelschicht ist diese besonders bevorzugt aus einem Klebstoff, einem Wachs oder einer Gummierung, die sich allesamt einfach zur Vorbereitung des Entpfandungsvorgangs entfernen lassen, ausgebildet.

Schließlich kann auch eine Erfassungseinheit zum automatischen Erfassen einer Kennzeichnung einer bepfandeten Einwegverpackung vorgesehen sein, die insbesondere zur Verwendung mit dem beschriebenen Pfandsystem vorgesehen ist. Die Erfassungseinheit umfasst insbesondere einen Scanner zur Erfassung der Kennzeichnung einer Einwegverpackung und weist Erfassungsmittel zum Ablesen der Kennzeichnung auf, sowie Mittel, die sicherstellen, dass die Erfassung der Kennzeichnung nur bei entleerter Verpackung erfolgt. Durch die Verwendung einer kleinen, tragbaren, Handeinheit in Form einer Scanners ist es in diesem Fall der die zurückzugebenden Einwegverpackungen entgegennehmenden Instanz vorbehalten, wie deren entsprechende Lagerung auszugestalten ist, während die mit dem Entpfandungsvorgang einhergehenden Vorgänge von der Erfassungseinheit geleistet werden können. Ein Benutzer kann die Komponenten dieses modularen Systems getrennt oder zusammen benutzen.

Ein zentrales Problem bei der praktischen Umsetzung des erfindungsgemäßen Verfahrens sind die Übertragungszeiten und damit verbundenen Übertragungskosten für die Verbindung des Scanners mit einer zentralen Datenverarbeitungseinrichtung. Vorzugsweise wird die Abarbeitung deshalb batchweise erfolgen, um die Transaktionskosten zu senken. So können von einem Händler mehrere Labels zur Entpfandung erfasst und in einer Datei gesammelt werden. Diese Datei wird bei Überschreitung einer bestimmten Größe, wenn also eine bestimmte Anzahl von Labels erfasst wurde, an die zentrale Datenverarbeitungseinrichtung weitergeleitet. Dieses Verfahren böte sich beispielsweise bei einer im Zwischenhandel befindlichen Vertriebs-oder Sammelstufe an.

Bei einer alternativen Lösung kann vorgesehen sein, dass beim Kauf einer Einwegverpackung von dem Händler ein Bon ausgegeben wird, der bei der Rückgabe der Verpackung und der Entpfandung gegen den Pfandbetrag einlösbar ist. Der Zentralrechner schreibt dem Händler den Betrag gut, was ebenfalls batchweise erfolgen kann. Nicht eingelöste Bons gehen damit zum Vorteil des Händlers, was diese Lösung für den Händler besonders attraktiv macht.

Durch die Kopplung bestimmter Automaten an spezielle Händler ist für den Zentralrechner und das System bekannt, welche Auszahlungen der Handel vorgenommen hat. Der Zentralrechner kann somit eine Zentralüberweisung durchführen, so dass nicht jeder Bon eingebucht werden muss.

Zudem ist eine Erfassungsvorrichtung zum automatischen Erfassen einer Pfandmarke einer Einwegverpackung oder dergleichen vorgesehen. Insbesondere betrifft sie einen Scanner zur Erfassung der Pfandmarke einer Einwegverpackung. Vorzugsweise ist der Scanner als Handscanner ausgebildet.

Bekannte Erfassungsvorrichtungen, insbesondere Scanner, ermöglichen bereits eine relativ einfache Erfassung der Pfandmarken zur Entpfandung einer Verpackung bei der Rückgabe. Zur Realisierung des erfindungsgemäßen Verfahrens stellt sich jedoch zudem das Problem, dass ein Käufer unter Umständen versucht, eine Verpackung vor deren Entleerung unmittelbar zu entpfanden, um den Pfandgegenwert zu erhalten.

Durch die Erfindung soll eine gattungsgemäße Erfassungsvorrichtung derart weiterentwickelt werden, dass die Erfassung des Labels nur dann erfolgen kann, wenn die Verpackung tatsächlich entleert wurde. Da Verpackungen aus verschiedenen Werkstoffen, wie Polyethylen (PET), Blech, Aluminium, Mehrkomponentenwerkstoffen oder dergleichen gefertigt sind, hängt die Wahl der Mittel, um dieses sicherzustellen, grundsätzlich von dem Material des Verpackungswerkstoffes ab.

Für relativ starre Verpackungen wie Dosen, Büchsen oder dergleichen kann die Erfassungsvorrichtung mit einer Aufnahmevorrichtung für die Verpackungen versehen sein, die so dimensioniert ist, dass die Verpackung nur im entleerten Zustand in dieser aufnehmbar ist. Dieser Lösung liegt der Gedanke zugrunde, dass die Einwegverpackung im geschlossenen Zustand durch das enthaltene Medium grundsätzlich nicht zusammendrückbar ist. Die starre Verpackung lässt sich hingegen zumindest geringfügig zusammendrücken, wenn diese geöffnet ist.

Die Aufnahmevorrichtung kann eine im Wesentlichen brückenförmige Gestalt aufweisen, mit einem zwischen zwei Schenkeln sich erstreckenden Freiraum. Der lichte Abstand zwischen den vorderen Enden der Schenkel ist geringfügig kleiner als der Außendurchmesser der zu erfassenden Verpackung. Da die Leseeinheit im Wesentlichen am Scheitelpunkt, also dem höchsten Punkt der brückenförmigen Ausnehmung angeordnet ist, kann das Erfassen nur dann erfolgen, wenn das Label im unmittelbaren Bereich der Leseeinheit gebracht wird. Dieses ist aber wiederum nur dann möglich, wenn die Verpackung zusammengedrückt wurde, um sie in die Aufnahmevorrichtung einzusetzen.

In einer Weiterentwicklung kann vorgesehen sein, dass der lichte Abstand zwischen den Schenkeln der Aufnahmevorrichtung einstellbar ist, um diese für verschiedene Verpackungen mit unterschiedlichen Dimensionen verwenden zu können.

Bei einer anderen Lösung kann an der Erfassungsvorrichtung ein Bügel oder dergleichen vorgesehen sein, der so dimensioniert ist, dass das Ablesen der Pfandmarke nur dann möglich ist, wenn der Bügel in die Öffnung der zu entwertenden Verpackung eingeführt ist. Der Bügel verhindert damit die Anordnung der geschlossenen Verpackung vor der Leseeinheit der Erfassungsvorrichtung. Gelesen werden kann nur dann, wenn der Bügel in die Öffnung der Verpackung eingeschoben ist. Naturgemäß wird die Einwegverpackung dann auch leer sein. Um zu verhindern, dass sich nicht doch noch Flüssigkeit in der Einwegverpackung befindet, kann das freie Ende des Bügels zudem mit einem Feuchtigkeitssensor versehen sein.

Der Bügel kann beispielsweise eine im Wesentlichen U-förmige Gestalt aufweisen, der sich zunächst seitlich von dem Befestigungspunkt an der Erfassungsvorrichtung von dieser weg erstreckt und nach einer 180 - Krümmung zurück vor die Leseeinheit der Erfassungsvorrichtung führt.

Der Bügel kann an bestehenden Erfassungsvorrichtungen, wie beispielsweise einem Handscanner, nachgerüstet werden.

Zur Anpassung des Bügels an verschiedene Verpackungsgrößen kann vorgesehen sein, dass der Bügel in seiner Größe verstellbar ist. Beispielsweise kann er teleskopartig ausgebildet sein, um die Größenanpassung für die Erfassung von Dosen und Flaschen vorzunehmen.

Eine alternative Lösung sieht vor, die Erfassungsvorrichtung mit einem Dorn auszustatten, der beim Erfassen in die Verpackung eindringt. Wie bei den zuvor beschriebenen Lösungen liegt auch dieser der Gedanke zugrunde, dass das Ablesen des Labels nur im unmittelbaren Bereich der Erfassungseinheit möglich ist.

Eine andere Lösung sieht vor, die Erfassungsvorrichtung mit Schallgeber zur Ausübung eines Schallimpulses auf die = Verpackung und Schallerfassungsmitteln zur Erfassung des Schallimpulses auszustatten. Der Schallgeber kann beispielsweise ein einfacher Lautsprecher sein. Vorzugsweise finden jedoch Lithotriptoren Anwendung, die eine kurze, explosionsartige Schallwelle erzeugen. Das Schallerfassungsmittel ist vorzugsweise als Mikrofon ausgebildet. Dieses Mikrofon erfasst das von dem Schallerzeugungsmittel ausgesendete Signal. Da sich das Signal in Flüssigkeiten unterschiedlich schnell ausbreitet als in der Luft, ist mittels der Laufzeitverzögerung oder Spektralanalyse mit Entscheidungskriterien ermittelbar, ob die Verpackung voll oder leer ist. Die Spektralanalyse des Echos gibt Auskunft über den Füllzustand der Verpackung.

Das erfindungsgemäße Pfandsystem und die Mittel zu deren Durchführung sind in der Zeichnung beispielhaft anhand der Figuren beschrieben. Es zeigen:
- Fig. 1:: den grundsätzlichen Systemablauf als Kreislauf einer bepfandeten Einwegverpackung,
- Fig. 2:: das Diagramm möglicher Angriffsformen auf Pfandsysteme und Maßnahmen zu deren Abwehr,
- Fig. 3:: grafische Darstellungsformen von Kennzeichnungen, z. B : von Pfandnummern,
- Fig. 4:: den Aufbau eines erfindungsgemäßen Originalitätssiegels,
- Fig. 5:: das Prinzip der Pfandentwertung,
- Fig. 6:: einen mobilen Handscanner zum Einsatz mit einem Pfandsystem,
- Fig. 7:: einen Handscanner mit einer erfindungsgemäßen Aufnahmevorrichtung,
- Fig. 8:: eine Seitenansicht eines Handscanners mit einem erfindungsgemäßen Bügel,
- Fig. 9:: eine Seitenansicht einer alternativen Ausbildung eines Handscanners, der mittels Schall und Resonanz arbeitet.
- Fig. 10:: eine Draufsicht auf die einem Benutzer zugewandte Seite einer Ausführungsform der Rücknahmeeinrichtung ; und
- Fig. 11:: einen Querschnitt durch die Darstellung der Rücknahmeeinrichtung der Fig. 10 entlang der Linie X-X.

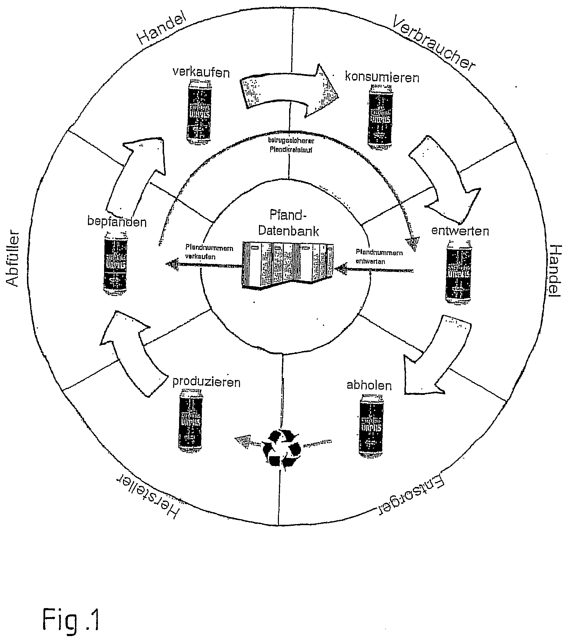

Der grundsätzliche Systemablauf mit den Pfand-und Stoffkreisläufen ist in Figur 1 dargestellt. Demnach lassen sich zwei Kreisläufe identifizieren, der Stoffkreislauf und der Pfandkreislauf.

Der Stoffkreislauf ist in Fig. 1 durch breite Pfeile gekennzeichnet. Der Hersteller produziert Einwegverpackungen die während des Abfüllvorgangs mit durch den Abfüller erworbenen Pfandnummern als Kennzeichnungen etikettiert werden. Die so gekennzeichneten Produkte werden inklusive Pfandkosten an den Handel verkauft. Dieser verkauft die Produkte inklusive Pfandkosten an den Verbraucher weiter. Nach dem Konsum bringt der Verbraucher die leeren Einwegverpackungen zum Handel zurück. Die beim Handel zurückgenommenen Einwegverpackungen werden nach der Entwertung für den Entsorger bereitgestellt. Besondere Anforderungen an die Bereitstellung, wie z. B. die vorherige Zerstörung oder Diebstahlsicherung, bestehen nicht. Die Einwegverpackungen können somit in Containern, Säcken oder Tonnen zur Abholung durch den Entsorger bereitgestellt werden.

Wiederverwertungsfähige Materialien können nach ihrem Recycling dem Hersteller zur Produktion von neuen Verpackungen als Rohstoff verkauft werden.

Der Pfandkreislauf ist in Fig. 1 durch dünne Pfeile gekennzeichnet. Der Abfüller erwirbt für jede seiner Einwegverpackungen eine individuelle Pfandnummer, die er von der Pfanddatenbank erhält. Durch Aufbringen der Pfandnummer auf die Einwegverpackung ist die Einwegverpackung bepfandet, da in der Pfanddatenbank der Pfandwert dieser Einwegverpackung vermerkt ist. Der Pfandwert verbleibt durch alle Handelsstufen auf der Einwegverpackung bis der Verbraucher die Einwegverpackung an den Handel zurückgibt. Bei der Rücknahme wird die Pfandnummer aus der Pfanddatenbank online ausgetragen und der Pfandwert wird dem Verbraucher gutgeschrieben. Ab diesem Zeitpunkt ist die aufgebrachte Pfandnummer wertlos und kann kein zweites Mal zurückgegeben werden. Damit können die Einwegverpackungen in offenen Behältern zur Abholung bereitgestellt werden. Die Einwegverpackungen haben nach der Entwertung lediglich Rohstoffwert.

Das System bietet die folgenden Vorteile:
- Die Verwendung elektronischer Entwertungsgeräte ermöglicht die Trennung der zwei Kreisläufe und das Aufstellen von mechanischen Automaten zum Zerstören der Einwegverpackung unnötig.
- Die elektronischen Entwertungsgeräte können erheblich preiswerter hergestellt werden. Sie erlauben durch geringe Kosten und kleine Abmessungen einen flächendeckenden Einsatz. Mit portablen Entwertungsgeräten können Kioske, Restaurants, Tankstellen und der Handel Verpackung dort zurücknehmen, wo sie verkauft werden.
- Durch die Nutzung individueller Pfandnummern ist die Pfandhöhe beliebig in Höhe und Währung wählbar. Damit ist das System international skalierbar.
- Das erfindungsgemäße Pfandsystem ist unabhängig von Verpackungsformen und-größen sowie deren Änderungen im Gegensatz zu Rücknahmeautomaten, die nur eine begrenzte Anzahl Einwegverpackungstypen erkennen, verarbeiten und sortieren können.

Die Sicherheit vor Missbrauch ist ein Kernproblem für Pfandsysteme. Das erfindungsgemäße Pfandsystem hält u. A. den folgenden Angriffszenarien stand:
a) Wiederholte Einbringung von Einwegverpackungen
   Szenario: Durch wiederholte Einbringung von Einwegverpackungen für die bereits das Pfand ausbezahlt wurde, können Pfandauszahlungen erschlichen werden.
   Maßnahme: Die Verwendung von eindeutigen Pfandnummern und die Online-Prüfung in der Pfanddatenbank bei Rückgabe ermöglicht die Erkennung einer erneuten Einbringung bereits entwerteter Einwegverpackungen an allen Rückgabestationen. Eine mehrmalige Auszahlung des Pfandes wird damit verhindert.
b) Einbringung systemfremder Einwegverpackungen
   Szenario: Durch Einbringung systemfremder Einwegverpackungen für die kein Pfand entrichtet wurde, können Pfandauszahlungen erschlichen werden.
      Bei den bisher im Markt befindlichen Pfandverfahren für MehrwegVerpackungen beträgt das Pfand EUR 0,15 je Verpackung. Die Herstellkosten der Verpackungen liegen jedoch bei ca. EUR 0,17 je Verpackung. Der Pfandwert liegt also unter dem Herstellungspreis der Verpackung.
      Durch den für Einwegverpackungen geplanten relativ hohen Pfandwert (z. B. EUR 0,25 bis EUR 0,50) besteht eine hohe Motivation, das Pfandsystem zu betrügen, da der Pfandwert der Verpackung über den Herstellkosten liegt. Insbesondere bei Dosen mit Herstellkosten von wenigen Cent ist die Betrugsgefahr erheblich.
   Maßnahme: Die eindeutige Pfandnummer im Pfandkreislauf schließt diesen Angriff aus. Bei der Rücknahme der Verpackung wird in der Pfanddatenbank online geprüft, ob für diese Einwegverpackung zuvor Pfand eingezahlt und dieses noch nicht ausgezahlt wurde. Damit ist es ausgeschlossen, systemfremde Verpackungen, die keine Pfandnummer aufweisen, gegen Auszahlung von Pfand zurückzugeben.
c) Vorzeitige Entwertung von Einwegverpackungen
   Szenario 1: Durch Entwertung von Einwegverpackungen noch vor dem Verkauf an den Verbraucher, z. B. durch den Handel, kann die Einwegverpackung bereits entpfandet worden sein, wenn die Ware gekauft wird. Hierdurch wird der Verbraucher um das Pfand betrogen, da bei der Rückgabe die bereits erfolgte Entwertung festgestellt wird und der Verbraucher sein Pfand nicht zurück erhält.
   Maßnahme: Dieser Betrugsfall ist grundsätzlich durch die Pfanddatenbank erkennbar, da die Pfanddatenbank automatisch eine Mehrfachrücknahme registriert. Wenn der Verbraucher versichert, Pfand bezahlt zu haben, wird ein Prozess angestoßen, der den Fall dem Fraud-Management (Fraud Detection: Aufdeckung eines einfachen oder organisierten Leistungsmissbrauchs) übergibt. Es werden die Kauf-und Adressdaten des Verbrauchers aufgenommen und die Einwegverpackungen gesondert sichergestellt. Bei systematischem Betrug ist der Betrüger dadurch identifizierbar.
      Um die Betrugsmöglichkeiten weiter einzuschränken, werden die Pfandnummern in einer Weiterentwicklung auf den Einwegverpackungen verdeckt aufgebracht (versiegelt). Erst ein Freireiben oderrubbeln ermöglicht das Auslesen der Pfandnummer und damit die Auszahlung des Pfands. Eine vorzeitig entwertete Verpackung kann vom Verbraucher dadurch an der aufgedeckten Pfandnummer erkannt werden.
   Szenario 2: Durch Entwertung voller Einwegverpackungen direkt nach dem Kauf durch den Verbraucher wird das Pfand entwertet und zurückbezahlt. Damit hat der Kunde eine Einwegverpackung ohne Pfand erworben und muss die Einwegverpackung nicht mehr zurückgeben.
   Maßnahme: In diesem Betrugsfall unterläuft der Verkäufer die Verpackungs-Verordnung und begeht damit eine Ordnungswidrigkeit. Zur Entpfandung ist ein Pfandscanner sowie ein Vertrag mit dem Betreiber der Pfanddatenbank notwendig. Durch vertragliche Vereinbarung kann ein Verkauf von entwerteten Produkten mit entsprechenden Sanktionen verbunden werden. Bei größeren (unbeaufsichtigten) Rücknahmestationen kann eine Entwertung des Pfandes mit der physischen Kontrolle der Rückgabe einer Einwegverpackung verbunden werden.
d) Duplizieren der Pfandkennzeichnungen Szenario: Da die Pfandkennzeichnung den eigentlichen Wert des Pfandes repräsentiert, könnten Hersteller, Abfüller, Handel und Verbraucher Duplikate der Pfandnummern herstellen und so versuchen, Pfand zu erschleichen.
   Maßnahme: Durch die eindeutige Pfandnummer und deren Online Prüfung bei der Einreichung wird eine mehrfache Auszahlung von Pfand für duplizierte Pfandkennzeichnungen ausgeschlossen. Das System erkennt den Betrug und meldet die versuchten Mehrfacheinreichungen an das Fraud-Management.
e) Raten von Pfandnummern
   Szenario: Hersteller, Abfüller, Handel und Verbraucher können versuchen, selbst gültige Pfandnummern zu erzeugen und ohne die Entrichtung von Pfand eine Auszahlung erreichen.
   Maßnahme: Durch Wahl eines großen Nummernkreises ist das erfolgreiche Raten von Pfandnummern faktisch unmöglich. Beispielsweise ist nur eine aus 10 Millionen möglichen Nummern gültig.
f) Verändern von Pfandnummern
   Szenario: Hersteller, Abfüller, Handel und Verbraucher können versuchen, die bestehenden Pfandnummern zu verändern und damit das Pfand unauszahlbar zu machen.
   Maßnahme: Die Veränderung von Pfandnummern wird bei der Online Rücknahme detektiert, da auch hier der große Nummernkreis die veränderten Pfandnummern als ungültig erkennt. Dies entspricht dann dem Pfandnummern raten.
g) Modifikation der Rücknahmesysteme
   Szenario: Sofern für die Pfandauszahlung bargeldlose Gutschriften vorgesehen sind, könnten Händler vom Verbraucher Verpackungen annehmen und durch Manipulation bargeldlose Gutschriften verhindern. Mit den Einwegverpackungen würde dann eine spätere, echte Transaktion zu eigenen Gunsten vorgenommen.
   Maßnahme: Da der Händler in diesem Fall nicht das Pfandsystem, sondern den Verbraucher betrügt, fällt dem Verbraucher dieser Betrug mit hoher Wahrscheinlichkeit auf. Entsprechende Beschwerden von Verbrauchern werden dem Fraud-Management übergeben. Es ist auch möglich, dass bei jeder bargeldlosen Pfandrücknahme ein Quittungsbeleg für den Kunden gedruckt wird. Erfolgt eine Buchung der Pfandauszahlung ausschließlich bargeldlos, kann dem Händler ggfs. die Transaktion zu eigenen Gunsten nachgewiesen werden.

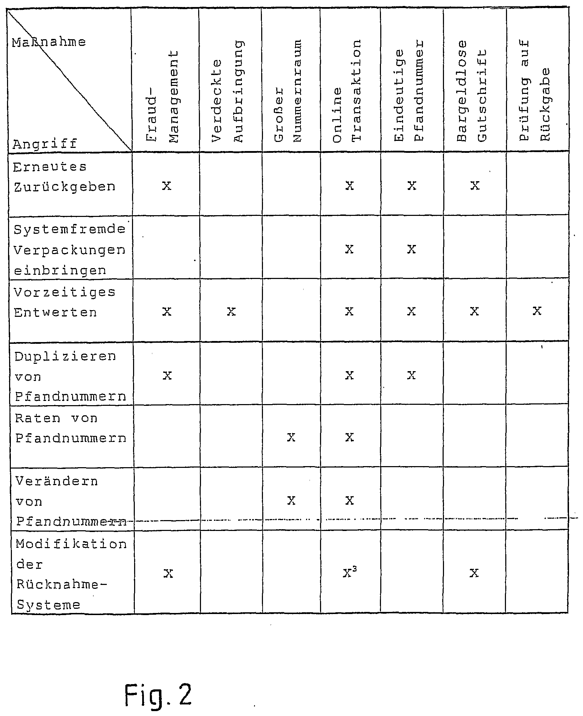

Figur 2 stellt die bisher identifizierten Angriffe sowie Maßnahmen zu deren Vermeidung nochmals gegenüber.

Die Darstellung der Angriffsmöglichkeiten zeigt, dass alle Angriffe erkannt werden können. Daraus ergibt sich die Möglichkeit der Nachverfolgung im Rahmen von Fraud-Management.

Die Transparenz der Angriffe erlaubt eine beliebige Skalierung der Verfolgung von Betrug. Die dazu notwendigen Aufwendungen für die Sicherheit des Systems sind damit an den realen Sicherheitsbedarf des Systems anpassbar.

Da die Einwegverpackungen nicht zerstört werden und Pfand jeweils nur einmalig ausgezahlt wird, können im Verdachtsfall Beweismittel gesichert werden.

Die Systemteilnehmer Abfüller und Handel sind gegenüber dem zentralen System identifiziert. Eine systematische Manipulation birgt ein erhebliches Risiko, erkannt und überführt zu werden.

Ohne eine elektronische Abwicklung über eine Online-Datenbank ist ein Betrug in unbekannter Höhe möglich und kann systembedingt nicht festgestellt werden. Der Vorteil des Online-Systems liegt daher nicht nur in der möglichen Vermeidung von Angriffen, sondern insbesondere in deren Erkennung.

Für die Pfandkennzeichnung bestehen verschiedene Realisierungsvarianten. Es wird davon ausgegangen, dass i. d. R. die Pfandnummer bereits beim Abfüllprozess auf den Einwegverpackungen aufgebracht wird. Die Kennzeichnung mit dem Pfand muss nicht zwangsläufig bei der Produktion erfolgen. Eine spätere oder frühere Aufbringung der Pfandnummer ist ebenfalls realisierbar, beispielsweise auf Importware des Handels.

Systemgemäß muss jede Pfandnummer eindeutig sein und jede Einwegverpackung erhält ihre unverwechselbar zugeordnete Pfandnummer.

Die Produktion oder Vergabe der Pfandnummern wird zentral verwaltet und gesteuert, um Fälschungen und Manipulationen auszuschließen.

Die Pfandnummerierung kann beispielsweise ausgelegt sein für 100 Milliarden (10¹¹) Einwegverpackungen die mit dem System gleichzeitig verarbeitet werden können. Dies beinhaltet die Verpackungen mehrerer Jahre, da der Verbraucher die Verpackungen über lange Zeit besitzen kann, bevor eine Rückgabe erfolgt.

Eine Fälschungssicherheit ist durch Auswahl eines entsprechend großen Nummernkreises gewährleistet, der vorzugsweise 10 Millionen (10⁷) mal größer ist, als die tatsächlich verwendeten Nummern. Damit ist die Chance, eine richtige Nummer durch Betrug erzeugen zu können, für jede Verpackung ebenfalls 1 zu 10 Millionen. Daraus ergibt sich eine darzustellende Pfandnummer aus dem Bereich 10¹⁸.

Für die Darstellung der Pfandnummer bieten sich vielfältige Möglichkeiten. Die Darstellung der Information richtet sich nach benötigter Fläche und Lesbarkeit bei dem Entwertungsvorgang. Beispielhaft seien hier einige Varianten dargestellt.

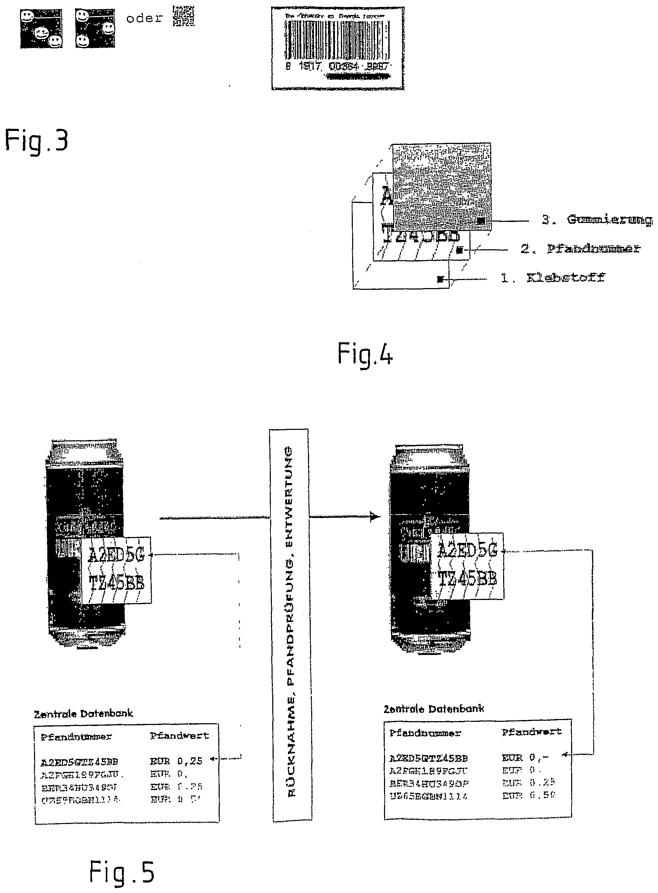

Die Darstellung der Pfandnummer ließe sich als numerische Zahl durch 18 Ziffern darstellen, z. B. 428912592927402856. Durch Kombination numerischer und alphabetischer Zeichen ließe sich die Pfandnummer als 12-stellige alphanumerische Nummer darstellen, z. B. A2ED5GTZ45BB oder in Form von getrennt voneinander angeordneten Zeichenketten ADED, 5GTZ, 45BB. Alternativ lässt sich das Pfandkennzeichen mit gleicher Sicherheit auch auf verschiedene Arten wie in Figur 3 dargestellt grafisch darstellen, z. B. mit Smileys.

Die Größe der Pfandnummer liegt vorzugsweise im Bereich zwischen 1/4 cm² und 4 cm² Fläche. Je nach Auswahl der Darstellung sind auch andere Größen in Abhängigkeit von der Einwegverpackung möglich.

Die Pfandnummern können auf verschiedene Weise aufgebracht werden. Grundsätzlich ist dieses mit den bereits in den Abfüllprozessen bestehenden Beschriftungssystemen möglich. Hierzu wird die Pfandnummer ähnlich wie eine variable Chargen-Nummer oder wie das Mindesthaltbarkeitsdatum aufgebracht. Die entsprechenden Pfandnummern werden von der Pfanddatenbank elektronisch an die Abfüller übermittelt. Sie sind aufgrund des großen Nummernkreises für den abfüllenden Betrieb nicht ratbar.

Doppelt verwendete Pfandnummern können mit Hilfe des Fraud Management erkannt und durch Sicherstellung der Einwegverpackungen nachgewiesen werden.

Die Pfandnummern können von der Pfanddatenbank auch in Form von Aufklebern geliefert werden. Dies verbessert die Einheitlichkeit und Lesbarkeit der Pfandnummern. Die Sichtbarkeit und insbesondere die Wiedererkennung der Pfandnummern durch den Verbraucher schafft zudem eine höhere Akzeptanz. Die Anlieferung von systemseitig hergestellten Aufklebern bietet darüber hinaus Möglichkeiten, Fälschungen am Material zu erkennen und damit das Fraud-Management zu verbessern. Schließlich ist es auch möglich, die Pfandnummer auf einen getrennt von dem Gegenstand vorgesehenen Träger nach Art eines Jetons aufzudrucken, den der Käufer zusammen mit der Einwegverpackung erhält und den er bei der Rückgabe der Einwegverpackung zurückgeben muss. Ein Entpfandung ist in diesem Fall aber tatsächlich nur dann möglich, wenn eine dem Wert des Jeton entsprechende Einwegverpackung zurückgeführt wird.

Damit ist bei dieser Lösungsvariante die Rücknahme nicht auf die individuelle Einwegverpackung beschränkt, sondern auf eine Klasse von Einwegverpackungen.

In einer Weiterentwicklung kann vorgesehen sein, dass der Verbraucher beim Kauf erkennen kann, dass eine Einwegverpackung bepfandet ist. Die Pfandnummer kann z. B. unter einem Siegel verdeckt aufgebracht sein. Das Pfand ist erst entwertbar, wenn das Siegel entfernt und damit zerstört worden ist. Im Umkehrschluss bedeutet ein unbeschädigtes Siegel, dass die Verpackung noch nicht entwertet wurde. Das Siegel dient damit als Originalitätssiegel. Der Aufbau eines solchen Siegels ist in Fig. 4. dargestellt.

Schicht 1 des Siegels ist ein Klebstoff, der den Aufkleber fest mit der Verpackung verbindet. Im Gegensatz zu Mehrweg-Etiketten ist der Kleber vorzugsweise nicht wasserlöslich.

Schicht 2 ist ein eingeschnittenes Papier oder eine Folie, auf dem die Pfandnummer aufgedruckt ist. Damit ist die Pfandnummer nicht ohne Zerstörung von der Einwegverpackung zu lösen.

Schicht 3 ist eine Siegelfolie oder Gummierung, welche die Pfandnummer verdeckt und erst nach Freireiben bzw.-rubbeln die Pfandnummer sichtbar werden lässt.

Demnach betrifft die Erfindung zudem ein Originalitätssiegel an dem auf jeder Verfahrensstufe für einen Verbraucher unmittelbar erkennbar ist, ob die Entwertung stattgefunden hat, da bei der Entwertung das Siegel zerstört wird. Die dritte Schicht muss nicht notwendigerweise als Gummierung ausgebildet sein. Die Zustandsänderung des Siegels könnte auch durch eine Umfärbung oder andere nicht umkehrbare Veränderungen erfolgen.

Das System der Pfandentwertung ist in Figur 5 dargestellt. Gibt der Verbraucher die Einwegverpackung an den Handel zurück, wird die Pfandnummer an die Datenbank mit den Pfandnummern übermittelt und als entwertet gespeichert. Die Pfandnummer ist zwar weiterhin auf der leeren Einwegverpackung, hat aber keinen Pfandwert mehr. Die leeren Einwegverpackungen können ab diesem Zeitpunkt logistisch einfach gesammelt und entsorgt werden. Eine erneute Auszahlung von Pfand für die Einwegverpackung wird durch die in der Datenbank gekennzeichnete Pfandnummer ausgeschlossen.

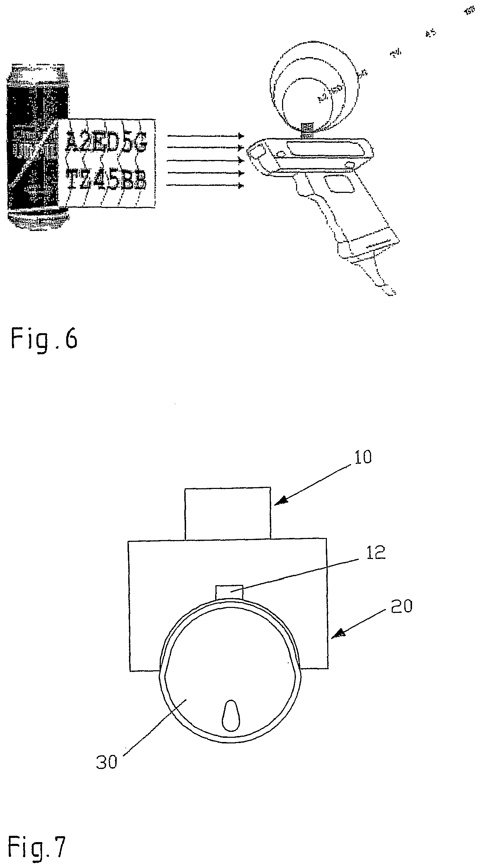

Die Erkennung der Pfandnummer kann insbesondere im Handel beispielsweise durch ein mobiles oder ein stationäres Erkennungssystem erfolgen. Der in Figur 6 als Erfassungseinheit dargestellte mobile Pfandscanner ist ein kleines, leichtes Handgerät, das an Kiosken, Volksfesten, Freizeitparks etc. eingesetzt werden kann. Der Scanner weist eine Erkennungseinheit, mit der die Pfandnummern von den Verpackungen abgelesen werden können, und eine Datenübertragungseinheit auf. Die Datenübertragung kann kabelgebunden oder per Funk erfolgen. Besonders kompakt ist die Ausbildung mit einer bi-direktional arbeitenden Bluetooth Funkschnittstelle. Bluetooth ist die schnurlose Verbindung verschiedener Kommunikationsgeräte. Durch die Funkübertragung ist eine Sichtverbindung zwischen den Endgeräten nicht mehr erforderlich. Wenn Pfandnummern mit Bildern eingesetzt werden kann in dem Scanner auch eine Bilderkennungseinheit vorgesehen sein.

Die von dem Scanner empfangenen Daten werden an die Pfanddatenbank beispielsweise über Datennetze übermittelt. Hierbei gibt es verschiedene Zwischenstationen, in denen die Daten gesammelt und weiterleitet werden. Ein oder mehrere Scanner können mit einer Basisstation (diese kann ein Mobilfunkturm oder ein Tischgerät sein) kommunizieren. Die Basisstation baut dann die Verbindung zur Pfanddatenbank auf. Dieses kann leitungsorientiert (ISDN, PSTN, GSM o. Ä.) oder paketorientiert (IP, GPRS o. Ä.) erfolgen.

Von der Pfanddatenbank wird die Bestätigung über das entwertete Pfand zurück an den Pfandscanner übermittelt, so dass nach vollständiger Rückgabe aller Einwegverpackungen der gesamte Pfandbetrag am Scanner ablesbar ist. Zum Abschluss der Rückgabe druckt der Handscanner einen Quittungsbeleg für den Verbraucher.

Auf der Basis des mobilen Pfandscanners können als Rücknahmevorrichtungen einsetzbare Selbstbedienungsstationen im Handel zur Verfügung gestellt werden, z. B. als Pfandscanner mit einfacher Wandmontage. Der Verbraucher entwertet dort seine Einwegverpackungen und wirft sie anschließend in einen Behälter.

Um zu verhindern, dass der Verbraucher volle Einwegverpackungen vorzeitig entwertet, überprüft ein Mechanismus den Einwurf einer Einwegverpackung, bevor der Pfandbetrag gutgeschrieben wird. Um die sofortige Entwertung neuer Einwegverpackungen vor dem Gebrauch zu unterbinden, kann die Aufnahmevorrichtung der Station so ausgebildet sein, dass diese den Gegenstand unentnehmbar aufnimmt und eventuell zählt.

Zur einfachen Gestaltung der Pfandabwicklung für den Handel kann das Pfand dem Verbraucher bargeldlos gutgeschrieben werden. Dazu identifiziert dieser sich gegenüber dem System. Das Pfand wird dann beispielsweise auf sein Bankkonto oder auf seine Telefonrechnung gutgeschrieben werden.

Als zusätzlicher Anreiz für Verbraucher und Handel kann weiterhin abhängig vom Standort der Einwegverpackungsrücknahme das jeweilige Bonussystem des Handels (Payback^{®}, Miles and More^{®}, Webmiles^{®} etc.) gebucht werden. Neben der Verrechnung des Pfands kann der Kunde so auch noch Rabattpunkte sammeln.

Die erste Entpfandung kann in ca. 20 Sekunden abgewickelt werden ; Folgetransaktionen benötigen dann im Bereich von 1-2 Sekunden. Dieses ergibt sich durch die Ausgestaltung als Online-System, bei dem der Verbindungsaufbau zur Pfanddatenbank i. d. R. mehr Zeit in Anspruch nimmt, als der eigentliche Transaktionsvorgang. An Standorten mit zahlreichen Pfandrückgaben kann die Zeit für den Verbindungsaufbau jedoch nahezu entfallen, da alle Transaktionen als Folgetransaktionen bewertet werden.

Die Transaktionskosten für eine Entwertung betragen derzeit etwa 1,25 Cent.

In einer Weiterentwicklung kann vorgesehen sein, dass die in der Pfandnummer zusätzlich mit anderen Datenbanken verglichen wird. Auf diese Weise kann beispielsweise ein zusätzlicher Anreiz geschaffen werden, indem beispielsweise jedes millionste Pfandgut mit einem Gewinn belohnt wird.

Dem Fachmann ist ersichtlich, dass das erfindungsgemäße Pfandsystem nicht nur für Einwegverpackungen verwendbar ist,
sondern auch für andere Gegenstände, für die eine geordnete Rückführung sichergestellt werden soll, z. B. für Batterien, gefährliche Chemikalien oder dergleichen.

Die Figur 7 zeigt eine als Handscanner 10 ausgebildete Erfassungseinheit, die mit einer erfindungsgemäßen Aufnahmevorrichtung 20 versehen ist in der Draufsicht. Die Aufnahmevorrichtung 20 weist eine im Wesentlichen brückenförmige Gestalt mit einem zwischen zwei Schenkeln sich erstreckenden Freiraum auf, wobei der lichte Abstand der vorderen Enden der Schenkel, also der Einschuböffnung für die Einwegverpackung, geringfügig kleiner ist als der Außendurchmesser der zu erfassenden Einwegverpackung 30.

Die Leseeinheit 12 des Handscanners ist am Scheitelpunkt der brückenförmigen Ausnehmung angeordnet. Eine Erfassung des Labels einer Dose oder dergleichen ist nur dann möglich, wenn die Dose geringfügig zusammengedrückt wird und in die Einschuböffnung einsetzbar ist, um den Label in den unmittelbaren Bereich der Leseeinheit 12 zu bringen. Dieses ist naturgemäß nur dann möglich, wenn die Einwegverpackung geöffnet und entleert worden ist. Anstatt an einem mobilen Handscanner kann die erfindungsgemäße Aufnahmevorrichtung auch an stationären Scannern vorgesehen sein. Bestehende Scanner sind damit nachrüstbar.

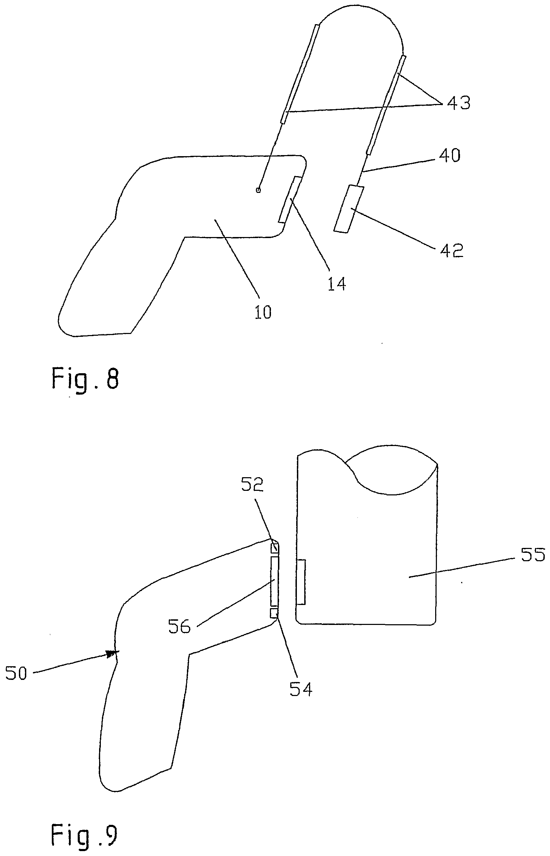

Figur 8 stellt eine weitere Ausbildung einer ebenfalls als Handscanner 10 ausgebildeten Erfassungseinheit in perspektivischer Ansicht dar. Auf der Oberseite des Scannergehäuses 10 ist ein U-förmiger Bügel 40 befestigt, der sich zunächst seitlich von dem Handscanner 10 weg erstreckt und nach einer Krümmung von 180 zurück vor die Leseeinheit 14 des Handscanners 10 ragt. Das Ende des Bügels 40 ist mit einer rechteckigen Platte 42 versehen. Da die Platte 42 unmittelbar vor der Leseeinheit angeordnet ist, kann eine zu entpfandende Einwegverpackung im geschlossenen Zustand nicht in den Erfassungsbereich der Leseeinheit 14 gebracht werden. Wenn die 13 Einwegverpackung hingegen leer ist,
kann das freie Ende des Bügels 40 und die Platte 42 in die Öffnung der Verpackung eingeschoben werden, so dass das Label der Einwegverpackung zur Entpfandung unmittelbar in den Bereich der Leseeinheit 14 gebracht werden kann. Der Bügel 40 ist in den Längserstreckungsabschnitten 43 teleskopierbar ausgebildet.

Figur 9 zeigt eine perspektivische Darstellung einer weiteren Ausführungsform eines Handscanners 50, der nicht mit Hilfe optischer Erkennungsmittel, sondern über die Schallerkennung arbeitet. Zu diesem Zweck sind am vorderen Ende des Handscanners 50 zueinander beabstandet ein Lithotriptor 52 und ein Mikrofon 54 angeordnet. Wenn eine zu entpfandende Dose oder eine andere Einwegverpackung zur Entpfandung vor die Leseeinheit 56 des Handscanners 50 angeordnet wird, sendet der Lithotriptor 52 einen Schallimpuls aus, der von dem Mikrofon 54 erfassbar ist. Über die Laufzeitverzögerung des Schalls in einer leeren Dose im Verhältnis zu einer befüllten Dose ist feststellbar, ob die Dose entleert ist oder nicht. Die Entpfandung erfolgt nur, wenn die Einwegverpackung tatsächlich leer ist.

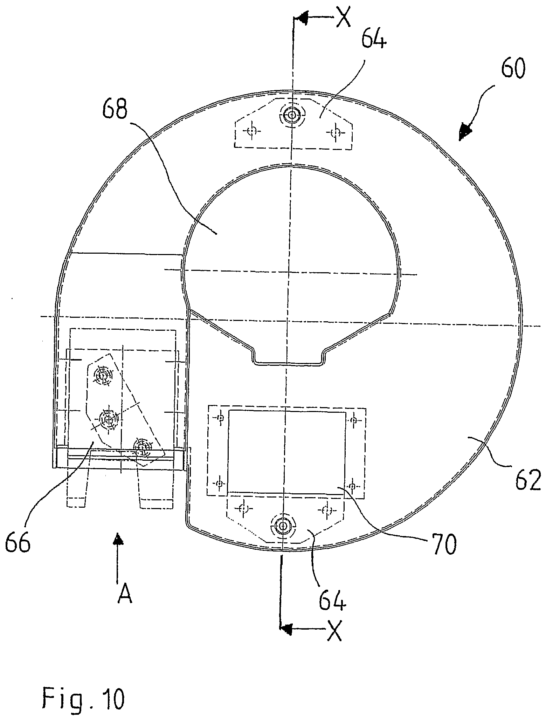

Die Figur 10 zeigt eine Draufsicht auf die Vorderseite einer erfindungsgemäßen Rücknahmeeinrichtung 60. Diese besteht zunächst aus einer im Wesentlichen kreisförmigen Grundplatte 62, die etwa aus einem Metall ausgebildet sein kann. Diese Grundplatte 62 ist auf ihrer dem Betrachter abgewandten Seite an zwei am Umfang der Grundplatte 62 angeordneten Befestigungselementen 64 an einem nicht dargestellten Sammelbehälter 72 befestigt, beispielsweise einem Sammelcontainer für Einwegverpackungen. Die Befestigungselemente sind vorliegend als im Wesentlichen trapezartige Schraubklemmen ausgebildet. In einem von dem Betrachter aus gesehen linken unteren Bereich der Rücknahmeeinrichtung 60 ist die Kreisform insoweit unterbrochen, als ein Teil des Kreisbogens ausgenommen wurde. An dem einen der Unterbrechungspunkte des Kreisbogens wird die Grundplatte tangential zu dem Kreisbogen gerade weitergeführt, wobei sich der dabei ergebende rechteckige Bereich in Richtung auf den Betrachter zu von der Grundplatte erhebt. Dieser erhabene Bereich nimmt eine strichliniert dargestellte Kartenleseeinheit 66 der Entpfandungseinrichtung auf, in die beispielsweise eine Codekarte im Wesentlichen in Pfeilrichtung A eingeführt werden kann und dort zur Inbetriebnahme der Entpfandungseinrichtung oder als Hilfsmittel in einem Abrechnungsverfahren verwendet werden kann. Um den Mittelpunkt der Grundplatte 62 ist eine Zuführungsöffnung 68 der Rücknahmeeinrichtung 60 angeordnet, wobei der Mittelpunkt der Grundplatte 62 nicht mit der Mitte der Zuführungsöffnung 68 übereinstimmt, die radial versetzt ist. Die Zuführungsöffnung 68 weist einen kreisförmigen Bereich auf, an dessen Enden zwei gerade schenkelartige Abschnitte angeordnet sind, die auf einen wannenförmigen, die Schenkel verbindenden Abschnitt zulaufen. Insgesamt stellt sich die Rücknahmeeinrichtung 60 für den Betrachter der Fig. 10 in etwa ringförmig dar. Führt ein Benutzer einen zu entpfandenden Einwegverpackungen in die Rücknahmeeinrichtung 60 ein so kann er diesen durch ein an der Oberfläche der Grundplatte angeordnetes, mit einer Glasplatte versehenes Sichtfenster 70 beobachten, und gegebenenfalls neu ausrichten, so dass der Gegenstand erfasst, identifiziert und entpfandet werden kann.

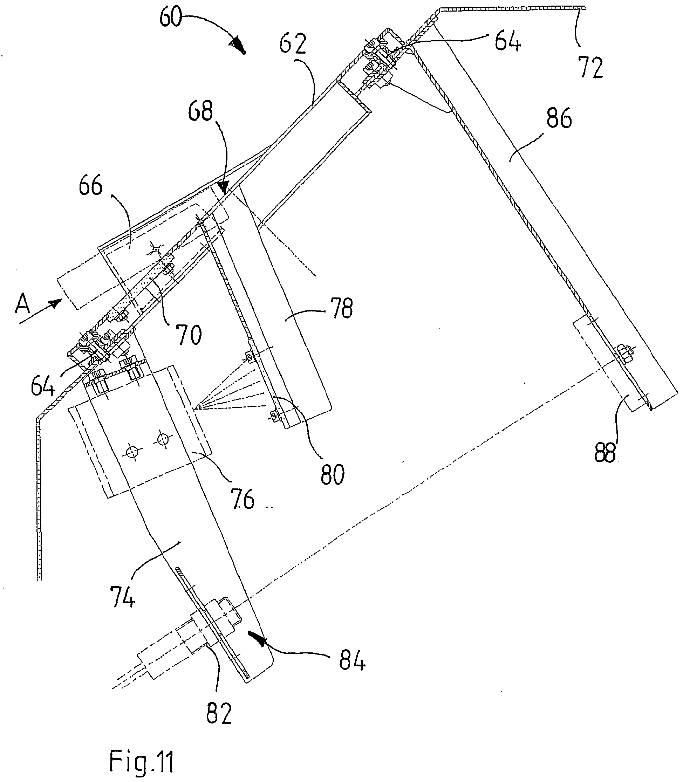

In der Figur 11 ist ein Schnitt durch die Rücknahmeeinrichtung 60 der Figur 10 entlang der Linie X-X dargestellt. Die Rücknahmeeinrichtung 60 ist dabei an einem Sammelbehälter 72 angeordnet und überdeckt dessen Aufnahmeöffnung. Deutlich ist weiterhin der von der Grundplatte 62 erhabene Bereich zu erkennen, der die Kartenleseeinheit 66 aufnimmt. In Richtung des Sammelbehälterinneren führt vom Randbereich der Grundplatte 62 ein Steg 74. An diesem ist eine Erfassungsvorrichtung 76 angebracht, die im vorliegenden Fall einen Scanner aufweist. Wird ein zu entpfandender Gegenstand durch die Zuführungsöffnung 68 gesteckt, so kann er derart vor der Erfassungsvorrichtung 76 angeordnet werden, dass der Scanner die auf ihm angebrachte Kennzeichnung erfassen und identifizieren kann. Zur Erleichterung der Ausrichtung des Gegenstandes ist ein ebenfalls von dem Randbereich der Grundplatte 62 in das Behälterinnere ragender Steg als Führungsschiene 78 angeordnet, wobei dieser an seinem freien, dem Behälterinneren zugewandten Ende der Erfassungsvorrichtung gegenüberliegend eine Sichtscheibe 80 aufweist. Mit Hilfe der Führungsschiene 78 und des Sichtfensters 70 kann der Gegenstand leicht derart ausgerichtet werden, dass seine Kennzeichnung von dem Strahl des Scanners erfassbar ist. Die Führungsschiene 78 dient somit als Ausrichtungshilfe für den zu entpfandenden Gegenstand, um die Zahl der translatorischen Bewegungsrichtungen zu reduzieren und so eine einfachere und richtige Ausrichtung des Labels im Verhältnis zur Erfassungseinrichtung 76 zu ermöglichen.

Der auf die Identifikation der Einwegverpackung erfolgende Entpfandungsvorgang wird mittels nicht dargestellter elektronischer Bauteile bewerkstelligt, die nicht dargestellt einfach im Innenbereich der Rücknahmeeinrichtung anordenbar sind. Dabei sind sowohl die Kommunikationsmittel zur Verbindungsaufnahme mit einer Datenbank als auch etwa die Spannungsversorgung derart modular ausgelegt, dass sie ohne großen Aufwand jederzeit an der Rücknahmeeinrichtung 60 anordenbar und wieder von dieser entfernbar sind. Weiter in Richtung des Behälterinneren ist an einem freien Ende des Stegs 74 das Leuchtmittel 82 einer Lichtschranke 84 angeordnet. Deren Licht trifft auf einen an einem weiteren, gegenüberliegenden, von der Grundplatte 62 in das Behälterinnere ragenden Steg 86 angeordneten Reflektor 88. Dabei ist der Entpfandungsvorgang für die zurückzugebenden Einwegverpackung so ausgelegt,
dass ein Abrechnungsvorgang für den Pfandwert der Einwegverpackung erst dann angestoßen wird, wenn die Einwegverpackung die Lichtschranke 84 passiert hat. Somit ist sichergestellt, dass die Einwegverpackung nicht nachträglich wieder aus der Rücknahmeeinrichtung entnommen werden kann und der Anspruch auf den Pfandwert zu Recht besteht.

### Bezugszeichenliste

- 10: Handscanner
- 12: Leseeinheit
- 14: Leseeinheit
- 20: Aufnahmevorrichtung
- 30: Einwegverpackung
- 40: Bügel
- 42: Platte
- 43: Längserstreckungsabschnitte
- 50: Handscanner
- 52: Lithotriptor
- 54: Mikrofon
- 55: Dose
- 56: Leseeinheit
- 60: Rücknahmeeinrichtung
- 62: Grundplatte
- 64: Befestigungselement
- 66: Kartenleseeinheit
- 68: Zuführungsöffnung
- 70: Sichtfenster
- 72: Sammelbehälter
- 74: Steg
- 76: Erfassungseinrichtung
- 78: Führungsschiene
- 80: Sichtscheibe
- 82: Leuchtmittel
- 84: Lichtschranke
- 86: Steg
- 88: Reflektor

## Patentansprüche

1. Verfahren zur Verwendung eines rechentechnisch verwalteten Pfandsystems für Einwegverpackungen, mit den folgenden Verfahrensschritten :
- Zuordnen der Einwegverpackung (30) zu einer eindeutigen Kennzeichnung aus einer
Vielzahl in einer Datenbank verwalteten Kennzeichnungen (Verknüpfung), wobei zur Fälschungssicherheit ein Nummernkreis für die eindeutigen Kennzeichnungen vorgesehen ist, der grösser als die Anzahl der tatsächlich verwendeten Nummern ist,
- Zuordnen der Kennzeichnung aus der Datenbank zu einem Pfandwert,
- Aufdrucken der eindeutigen Kennzeichnung an der zu bepfandenden Einwegverpackung oder Anbringen mit einem Aufkleber, wobei die Kennzeichnung verdeckt aufgebracht (versiegelt) und vor einem Auslesen freigerieben oder freigerubbelt wird,
- Abfüllen der Einwegverpackung,
- Erfassen der eindeutigen Kennzeichnung der Einwegverpackung mit einem Scannern (50) und
- Identifizieren der Einwegverpackung anhand der eindeutigen Kennzeichnung,
- Lösen der Verknüpfung der Kennzeichnung in der Datenbank bei zerstörungsfreier Entpfandung der Einwegverpackung.

2. Verfahren nach Anspruch 1, **dadurch gekennzeichnet, dass** die Kennzeichnung der Einwegverpackung (30) mit weiteren Informationen verknüpft wird.

3. Rücknahmeeinrichtung (60) für bepfandete Einwegverpackungen unter Verwendung des
Verfahrens nach einem der vorstehenden Ansprüche, mit einer Aufnahmeeinrichtung (20) und wenigstens einer Erfassungsvorrichtung (76), wobei die Erfassungsvorrichtung (76) einen in der Aufnahmeeinrichtung angeordneten Gegenstand anhand einer auf diesem angebrachten Kennzeichnung erfasst und eindeutig identifiziert.

4. Rücknahmeeinrichtung (60) nach Anspruch 3, **dadurch gekennzeichnet, dass** weiterhin an der Rücknahmeeinrichtung eine Entpfandungseinrichtung vorgesehen ist, mittels derer die Einwegverpackung unbeschädigt in einem Entpfandungsvorgang entpfandbar und ein der Einwegverpackung zugeordneter Pfandwert einem Abrechnungsverfahren zuführbar ist.

5. Rücknahmeeinrichtung nach Anspruch 4, **dadurch gekennzeichnet, dass** die Entpfandungseinrichtung während eines Entpfandungsvorgangs zumindest zeitweilig in Verbindung mit wenigstens einer Datenbank steht, in der die Verknüpfung der Kennzeichnung gelöst wird.

6. Rücknahmeeinrichtung nach Anspruch 4 oder 5, **dadurch gekennzeichnet, dass** die Entpfandungseinrichtung Kommunikationsmittel aufweist, über die sie eine Verbindung zu einer Datenverarbeitungseinrichtung mit Zugriff auf eine Datenbank herstellt.

7. Rücknahmeeinrichtung nach einem der Ansprüche 3 bis 6, **dadurch gekennzeichnet, dass** die Aufnahmeeinrichtung (20) zur Positionierung der eingebrachten Einwegverpackung (30) mindestens eine Führungseinrichtung zur Ausrichtung der Einwegverpackung aufweist.

8. Rücknahmeeinrichtung nach einem der Ansprüche 3 bis 7, **dadurch gekennzeichnet, dass** an der Erfassungsvorrichtung (76) Erfassungsmittel in Form einer Lichtschranke (84) und/oder eines Scanners (10, 50) und/oder eine Kamera vorgesehen sind.

## Claims

1. A method for using a computerized deposit system for disposable packages having the following method steps:
- assigning the disposable package (30) a unique ID from a plurality of IDs administered in the database (linking), wherein to protect against forgery, a range of numbers is provided for the unique ID that is greater than the number of actually used numbers,
- assigning the ID from the database a deposit value,
- printing the unique ID on the disposable package to be deposited or affixing with a sticker, wherein the ID is applied hidden (sealed), and rubbed off or scratched off before being read out,
- filling the disposable package,
- detecting the unique ID of the disposable packaging with a scanner (50), and
- identifying the disposable package by the unique ID,
- deleting the ID link in the database when the deposit for the disposable package is redeemed.

2. The method according to claim 1, **characterized in that** the ID of the disposable package (30) is linked to additional information.

3. A return apparatus (60) for redeemed disposable packages using the method according to one of the preceding claims with a holding apparatus (20) and at least one detecting device (76), wherein the detecting device (76) detects and clearly identifies an object arranged in the holding apparatus based on an ID applied thereto.

4. The return apparatus (60) according to claim 3, **characterized in that** a redeeming apparatus is moreover provided in the return device by means of which the disposable package can be redeemed in a redeeming process without being damaged, and a redemption value assigned to the disposable packaging can be assigned to a billing procedure.

5. The return apparatus according to claim 4, **characterized in that** during the redeeming process, the redeeming apparatus is at least temporarily connected to at least one database in which the link to the ID is deleted.

6. The return apparatus according to claim 4 or 5, **characterized in that** the redeeming apparatus has communication means by which it establishes a link to a data processing apparatus with access to a database.

7. The return apparatus according to one of claims 3 to 6, **characterized in that** the holding apparatus (20) for positioning the introduced disposable package (30) has at least one guide device for aligning the disposable packaging.

8. The return apparatus according to one of claims 3 to 7, **characterized in that** detecting means in the form of a light barrier (84) and/or a scanner (10, 50), and/or a camera are provided in the detecting device (76).

## Revendications

1. Procédé pour l'utilisation d'un système informatique de consigne pour des emballages à usage unique, comprenant les étapes suivantes :
- attribution d'un étiquetage univoque à l'emballage à usage unique (30), à partir d'une multitude d'étiquetages (interconnexion) gérés dans une banque de données, où il est prévu une tranche de numéros pour protéger les étiquetages univoques contre la falsification, laquelle dépasse le nombre de numéros effectivement utilisés,
- attribution d'une valeur de consigne à l'étiquetage à partir de la banque de données,
- impression de l'étiquetage univoque sur l'emballage à usage unique à consigner, ou application à l'aide d'une colle, où l'étiquetage est appliqué de manière à être caché (scellé) et rendu visible par frottement ou grattage avant une lecture,
- remplissage de l'emballage à usage unique,
- détection de l'étiquetage univoque de l'emballage à usage unique à l'aide d'un scanner (50), et
- identification de l'emballage à usage unique à l'aide de l'étiquetage univoque,
- rupture de l'interconnexion de l'étiquetage dans la banque de données lors du retrait de la consigne sur l'emballage à usage unique.

2. Procédé selon la revendication 1, **caractérisé en ce que** l'étiquetage de l'emballage à usage unique (30) est interconnecté avec d'autres informations.

3. Système de reprise (60) pour emballages à usage unique consignés, en association avec le procédé selon l'une des revendications précédentes, comprenant un moyen de réception (20) et au moins un dispositif de détection (76), dans lequel le dispositif de détection (76) détecte et identifie de manière univoque un objet disposé dans le moyen de réception à l'aide d'un étiquetage appliqué sur celui-ci.

4. Système de reprise (60) selon la revendication 3, **caractérisé en ce que** le système de reprise comprend en outre un système de retrait de consigne permettant de supprimer la consigne sur l'emballage à usage unique sans endommager celui-ci, au cours d'une opération de retrait de consigne, et de délivrer une valeur de consigne attribuée à l'emballage à usage unique à un procédé de tarification.

5. Système de reprise selon la revendication 4, **caractérisé en ce que** le système de retrait de consigne est au moins temporairement relié à au moins une banque de données au cours d'une opération de retrait de consigne, dans laquelle l'interconnexion de l'étiquetage est rompue.

6. Système de reprise selon la revendication 4 ou 5, **caractérisé en ce que** le système de retrait de consigne présente des moyens de communication permettant d'établir une liaison avec un système de traitement de données avec accès à une banque de données.

7. Système de reprise selon l'une des revendications 3 à 6, **caractérisé en ce que** pour le positionnement de l'emballage à usage unique (30) déposé, le moyen de réception (20) présente au moins un moyen de guidage destiné à orienter l'emballage à usage unique.

8. Système de reprise selon l'une des revendications 3 à 7, **caractérisé en ce que** des moyens de détection sous la forme d'une barrière lumineuse (84) et/ou d'un scanner (10, 50) et/ou une caméra sont prévus sur le dispositif de détection (76).
